# EUROPEAN PATENT SPECIFICATION

(11) **EP 4 071 041 B1**
(45) Date of publication and mention of the grant of the patent: **30.07.2025**
(21) Application number: 22163389.4
(22) Date of filing: 21.03.2022
(51) Int. Cl.: B62M 6/90

(54) **BATTERY MANAGEMENT SYSTEM**
BATTERIEVERWALTUNGSSYSTEM
SYSTÈME DE GESTION DE BATTERIE

(30) Priority: 30.03.2021 CN 202110342464
(43) Date of publication of application: 12.10.2022
(73) Proprietor: DONGGUAN POWERAMP TECHNOLOGY LIMITED, Dongguan City, Guangdong Province 523000 (CN)
(72) Inventor: WEN, Shiyong, Dongguan, 523000 (CN); CHEN, Yong, Dongguan, 523000 (CN)
(74) Representative: Icosa

(56) References cited:
- CN-U- 211 018 800
- US-A1- 2013 069 704

## Description

### TECHNICAL FIELD

This application relates to the technical field of electronic circuits, and in particular to a single-line communication circuit and a battery management system, a battery pack, and an electrical apparatus.

### BACKGROUND

With the rapid development of electric vehicle (Electrical Bicycle, EB for short) technologies, requirements for mutual cooperation between a battery management system (Battery Management System, BMS for short) of an electric vehicle and an electronic control unit (Electronic Control Unit, ECU for short) of the electric vehicle are increasingly high.

In addition, digital communication needs to be implemented between the BMS and the ECU to transmit communication data between the two. In the prior art, the digital communication between the BMS and the ECU is usually implemented by means of RS485 communication or CAN communication.

However, both the RS485 communication and the CAN communication require at least two communication lines, and the RS485 communication and the CAN communication require the use of a dedicated isolator, transceiver, and isolated power supply, resulting in higher cost. An example of prior art can be found in US 2013/069704 and in CN 211 018 800.

### SUMMARY

The present invention is defined by the attached independent claims. Other preferred embodiments may be found in the dependent claims. The present application discloses a battery management system, comprising a single-line communication circuit (100), wherein the battery management system communicates with an external device through said single-line communication circuit (100), and wherein said single-line communication circuit (100) comprises:a first switch module (10) configured to perform a switching operation according to a first signal, a second switch module (20) configured to perform a switching operation according to a switching status of the first switch module (10), a third switch module (30) configured to perform a switching operation according to a second signal, a fourth switch module (40) configured to perform a switching operation according to a switching status of the third switch module (30);wherein the first signal is configured to be sent by the external device to the battery management system through a first signal terminal, the second signal is configured to be sent by the battery management system to the external device through a second signal terminal;wherein:the first switch module (10) comprises a first resistor, a second resistor and a transistor Q1, the first resistor is connected to the second resistor in series, the transistor Q1 is disposed between the second switch module (20) and a first reference ground, the first signal is transmitted to a control terminal of the transistor Q1 through the first signal terminal;the second switch module (20) comprises a fourth resistor, a fifth resistor, a sixth resistor, and a transistor Q2; the fourth resistor and the fifth resistor are disposed in series between a first power supply and the transistor Q1, the transistor Q2 and the sixth resistor are disposed in series between the first power supply and a second reference ground, the second signal terminal is disposed between the transistor Q2 and the sixth resistor;the third switch module (30) comprises a seventh resistor, an eighth resistor, and transistor Q3; the seventh resistor is connected to the eighth resistor in series, the transistor Q3 is disposed between the first power supply and the fourth switch module (40), the second signal is transmitted to a control terminal of the transistor Q3 through the second signal terminal; and the fourth switch module (40) comprises a tenth resistor, an eleventh resistor, and a transistor Q4; the tenth resistor and the eleventh resistor are disposed in series between the third switch module (30) and the first reference ground, the transistor Q4 is connected respectively to the first reference ground and the first signal terminal.

Beneficial effects of the embodiments of this application are as follows: According to the single-line communication circuit provided in this application, the single-line communication circuit includes a first switch module, a second switch module, a third switch module, and a fourth switch module, where the first switch module is configured to be connected to a first signal terminal outside the single-line communication circuit, and is configured to switch on or off according to a first signal sent by the first signal terminal outside the single-line communication circuit; the second switch module is configured to be connected to a receiving end of a second signal terminal outside the single-line communication circuit and to the first switch module, and is configured to switch on or off according to a switching status of the first switch module, to transmit the first signal to the second signal terminal outside the single-line communication circuit; the third switch module is configured to be connected to an output end of the second signal terminal outside the single-line communication circuit, and is configured to switch on or off according to a second signal output by the output end of the second signal terminal outside the single-line communication circuit; and the fourth switch module is configured to be connected to the third switch module and the electronic control unit, and is configured to switch on or off according to a switching status of the third switch module, to transmit the second signal to the first signal terminal outside the single-line communication circuit. Therefore, if the first signal terminal outside the single-line communication circuit includes the battery management system, and the second signal terminal outside the single-line communication circuit includes the electronic control unit, when the electronic control unit outputs the first signal, the first signal causes the first switch module to switch on, so that the second switch module switches on, and the first signal is transmitted to the battery management system; and when the battery management system outputs the second signal, the second signal causes the third switch module to switch on, so that the fourth switch module switches on, and the second signal is transmitted to the electronic control unit. In other words, communication between the battery management system and the electronic control unit is implemented by using a single line, and can be implemented by a hardware circuit without providing a device such as an isolator, so that cost is relatively low.

### BRIEF DESCRIPTION OF DRAWINGS

One or more embodiments are described by using examples with reference to figures in corresponding accompanying drawings. These example descriptions do not constitute a limitation on the embodiments. Elements with a same reference numeral in the accompanying drawings represent similar elements. Unless otherwise specified, the figures in the accompanying drawings do not constitute a limitation on scale.
FIG. 1 is a schematic structural diagram of a single-line communication circuit according to an embodiment of this application;
FIG. 2 is a schematic structural diagram of a single-line communication circuit according to another embodiment of this application;
FIG. 3 is a schematic diagram of a circuit structure of a single-line communication circuit according to an embodiment of this application;
FIG. 4 is a schematic diagram of a circuit structure of a single-line communication circuit according to another embodiment of this application;
FIG. 5 is a schematic diagram of a circuit structure of a reference ground control circuit according to an embodiment of this application; and
FIG. 6 is a schematic structural diagram of an electric vehicle according to an embodiment of this application.

### DETAILED DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the embodiments described are some rather than all of the embodiments of this application. All other embodiments obtained by persons of ordinary skill in the art based on the embodiments of this application without creative efforts shall fall within the protection scope of this application.

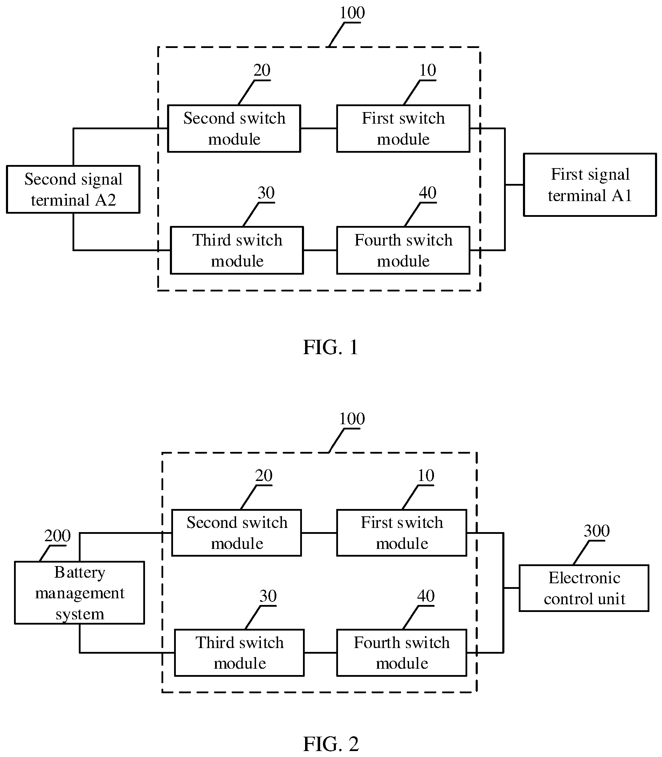

FIG. 1 is a schematic structural diagram of a single-line communication circuit according to an embodiment of this application. As shown in FIG. 1, the single-line communication circuit 100 includes a first switch module 10, a second switch module 20, a third switch module 30, and a fourth switch module 40.

Specifically, the first switch module 10 is configured to be connected to a first signal terminal A1 outside the single-line communication circuit 100; the second switch module 20 is configured to be connected to a receiving end of a second signal terminal A2 outside the single-line communication circuit 100 and to the first switch module 10; the third switch module 30 is configured to be connected to an output end of the second signal terminal A2 outside the single-line communication circuit 100; and the fourth switch module 40 is connected to the third switch module 30 and the first signal terminal A1 outside the single-line communication circuit.

In practical applications, when the first signal terminal A1 outside the single-line communication circuit 100 sends a signal to the second signal terminal A2 outside the single-line communication circuit 100, the first switch module 10 is configured to switch on or off according to a first signal sent by the first signal terminal A1 outside the single-line communication circuit 100, and the second switch module 20 is configured to switch on or off according to a switching status of the first switch module 10, to transmit the first signal to the second signal terminal A2 outside the single-line communication circuit 100.

When the second signal terminal A2 outside the single-line communication circuit 100 sends a signal to the first signal terminal A1 outside the single-line communication circuit 100, the third switch module 30 is configured to switch on or off according to a second signal output by the output end of the second signal terminal A2 outside the single-line communication circuit 100, and the fourth switch module 40 is configured to switch on or off according to a status of the third switch module 30, to transmit the second signal to the first signal terminal A1 outside the single-line communication circuit 100.

In an embodiment, with reference to FIG. 2 in conjunction with FIG. 1. In other words, the receiving end and the output end of the first signal terminal A1 outside the single-line communication circuit 100 correspond to a signal receiving end and a signal output end of the battery management system 200.

In conclusion, a first terminal of the first switch module 10 is connected to the electronic control unit 300, a first terminal of the second switch module 20 is connected to a second terminal of the first switch module 10, and a second terminal of the second switch module 20 is connected to the signal receiving end of the battery management system 200; and a first terminal of the third switch module 30 is connected to the signal output end of the battery management system 200, a second terminal of the third switch module 30 is connected to a first terminal of the fourth switch module 40, and a second terminal of the fourth switch module 40 is connected to the electronic control unit 300.

The first switch module 10 switches on or off according to the first signal output by the electronic control unit 300. In other words, the first signal can be used to control the first switch module 10 to switch on, or control the first switch module 10 to switch off.

In an embodiment, the first switch module 10 includes a first switch tube, and a control terminal of the first switch tube is configured to input the first signal, that is, the first switch tube switches on or off according to the first signal. A schematic diagram of a circuit structure of a single-line communication circuit shown in FIG. 2 is taken as an example for description, where the first switch tube corresponds to a transistor Q1.

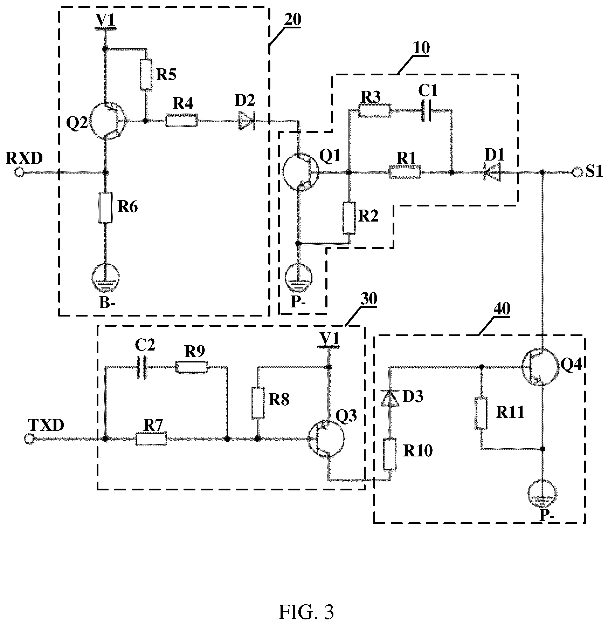

As shown in FIG. 3, the first switch module 10 includes a first resistor R1, a second resistor R2, and a transistor Q1, where a first terminal of the first resistor R1 is connected to the electronic control unit 300 through an interface S1, a second terminal of the first resistor R1 is connected to the base of the transistor Q1 and a first terminal of the second resistor R2, a second terminal of the second resistor R2 and the emitter of the transistor Q1 are both connected to a first reference ground P-, and the collector of the transistor Q1 is connected to the second switch module 20.

Optionally, the first switch module 10 further includes a third resistor R3 and a first capacitor C1, where the third resistor R3 is connected to the first capacitor C1 in series, and a series circuit formed by the third resistor R3 and the first capacitor C1 is connected to the first resistor R1 in parallel. To be specific, a first terminal of the third resistor R3 is connected to the second terminal of the first resistor R1, a second terminal of the third resistor R3 is connected to a first terminal of the first capacitor C1, and a second terminal of the first capacitor C1 is connected to the first terminal of the first resistor R1.

The third resistor R3 and the first capacitor C1 are configured to provide a path that is turned on quickly. When the first signal undergoes changes between high and low levels, the charge and discharge characteristics of the first capacitor C1 can be used to enable a change result of the first signal to be transmitted faster to the transistor Q1, so that the transistor Q1 is turned on and off quickly.

Optionally, the first switch module 10 further includes a first diode D1; and the anode of the first diode D1 is connected to the electronic control unit 300 through the interface S1, and the cathode of the first diode D1 is connected to the first terminal of the first capacitor R1.

The first diode D1 is configured to prevent a possible high voltage at the first reference ground P- from being reversely input to the electronic control unit 300, so as to protect the electronic control unit 300 from being damaged.

In practical applications, when the first signal output by the electronic control unit 300 is a high-level signal, the high-level signal is transmitted to the base of the transistor Q1 through the first diode D1, the first capacitor C1, and the third resistor R3 or through the first diode D1 and the first resistor R1. Because the emitter of the transistor Q1 is connected to the first reference ground P-, a voltage difference exists between the base and the emitter of the transistor Q1 and is greater than a turn-on voltage of the transistor Q1, and the transistor Q1 switches on, that is, the emitter and the collector of the transistor Q1 are connected.

Conversely, when the first signal output by the electronic control unit 300 is a low-level signal, the low-level signal can pull down a voltage of the base of the transistor Q1. Because the emitter of the transistor Q1 is connected to the first reference ground P-, a voltage difference between the base and the emitter of the transistor Q1 is 0 or close to 0, and the transistor Q1 switches off, that is, the emitter and the collector of the transistor Q1 are disconnected.

It should be noted that in FIG. 3, the first switch tube being the transistor Q1 is taken as an example. However, in other embodiments, the first switch tube may also be one of a MOS tube or an IGBT switch tube or the like. This is not limited herein.

Specifically, if the first switch tube is a transistor, the base of the transistor is a control terminal of the first switch tube, the emitter of the transistor is a first terminal of the first switch tube, and the collector of the transistor is a second terminal of the first switch tube. If the first switch tube is a MOS tube (pins of an IGBT switch tube are the same as pins of the MOS tube), the gate of the MOS tube is a control terminal of the first switch tube, the source of the MOS tube is a first terminal of the first switch tube, and the drain of the MOS tube is a second terminal of the first switch tube.

The second switch module 20 may switch on or off according to a switching status of the first switch module 10, to transmit the first signal to the battery management system 200. In other words, when the switching status of the first switch module 10 switches between on and off, the second switch module 20 may switch on or off accordingly.

In an embodiment, the second switch module 20 includes a second switch tube, and a signal input to a control terminal of the second switch tube is determined by the switching status of the first switch module 10, that is, the second switch tube switches on or off according to the status of the first switch module 10. The schematic diagram of the circuit structure of the single-line communication circuit shown in FIG. 3 is still taken as an example, where the second switch tube corresponds to a transistor Q2.

As shown in FIG. 3, the second switch module 20 includes a fourth resistor R4, a fifth resistor R5, a sixth resistor R6, and the transistor Q2, where a first terminal of the fourth resistor R4 is connected to the collector of the transistor Q1 in the first switch module 10, a second terminal of the fourth resistor R4 is connected to a first terminal of the fifth resistor R5 and the base of the transistor Q2, a second terminal of the fifth resistor R5 is connected to a first power supply V1 and the emitter of the transistor Q2, the collector of the transistor Q2 is connected to a first terminal of the sixth resistor R6, the collector of the transistor Q2 is also connected to the signal receiving end of the battery management system 200 through an interface RXD, and a second terminal of the sixth resistor R6 is connected to a second reference ground B-.

Optionally, the second switch module 20 further includes a second diode D2, where the anode of the second diode D2 is connected to the first terminal of the fourth resistor R4, and the cathode of the second diode D2 is connected to the collector of the transistor Q1 in the first switch module 10.

The second diode D2 is configured to prevent a possible high voltage at the first reference ground P- from being reversely input to the battery management system 200, so as to protect the battery management system 200 from being damaged.

Specifically, it can be learned from the foregoing embodiment that when the first signal output by the electronic control unit 300 is a high-level signal, the transistor Q1 switches on. In this case, from the first power supply V1 to the fifth resistor R5, the fourth resistor R4, the second diode D2, and the collector and the emitter of the transistor Q1 to the first reference ground P-, a loop is formed. A voltage drop of the first power supply V1 on the fifth resistor R5 is referred to as a voltage difference between the base and the emitter of the transistor Q2, and the transistor Q2 switches on. From the first power supply V1 to the emitter and collector of the transistor Q2, and the sixth resistor R6 to the second reference ground B-, a loop is formed. A voltage of the interface RXD is forcibly pulled up, that is, the battery management system 200 receives the high-level signal through the interface RXD in this case.

When the first signal output by the electronic control unit 300 is a low-level signal, the transistor Q1 switches off, that is, a loop passing through the collector and the emitter of the transistor Q1 is disconnected. Voltages of the base and the emitter of the transistor Q2 each are a voltage of the first power supply V1, and the transistor Q2 switches off. The interface RXD is connected to the second reference ground B- through the sixth resistor R6, and a voltage of the interface RXD is forcibly pulled down, that is, the battery management system 200 receives the low-level signal through the interface RXD in this case.

In conclusion, when the first signal output by the electronic control unit 300 is a high-level signal, the transistor Q1 switches on, the transistor Q2 switches on, and the battery management system 200 receives the high-level signal through the interface RXD; and when the first signal output by the electronic control unit 300 is a low-level signal, the transistor Q1 switches off, the transistor Q2 switches off, and the battery management system 200 receives the low-level signal through the interface RXD. Therefore, a process of transmitting data from the electronic control unit 300 to the battery management system 200 is implemented.

It can be understood that the actual selection and application of the second switch tube are similar to those of the first switch tube, and are within the scope that is readily understood by persons skilled in the art, and details are not described herein. However, it should be noted that the first switch tube and the second switch tube may be the same or different. For example, both the first switch tube and the second switch tube may be transistors.

The third switch module 30 is configured to switch on or off according to the second signal output by the signal output end of the battery management system 200, that is, the second signal can be used to control the third switch module 30 to switch on, or control the third switch module 30 to switch off.

In an embodiment, the third switch module 30 includes a third switch tube, and a control terminal of the third switch tube is configured to input the second signal, that is, the third switch tube switches on or off according to the second signal. The schematic diagram of the circuit structure of the single-line communication circuit shown in FIG. 3 is still taken as an example for description, where the third switch tube corresponds to a transistor Q3.

As shown in FIG. 3, the third switch module 30 includes a seventh resistor R7, an eighth resistor R8, and the transistor Q3, where a first terminal of the seventh resistor R7 is connected to the signal output end of the battery management system 200 through an interface TXD, a second terminal of the seventh resistor R7 is connected to a first terminal of the eighth resistor R8 and the base of the transistor Q3, a second terminal of the eighth resistor R8 is connected to the emitter of the transistor Q3 and the first power supply V1, and the collector of the transistor Q3 is connected to the fourth switch module 40.

Optionally, the third switch module 30 further includes a ninth resistor R9 and a second capacitor C2, where the ninth resistor R9 is connected to the second capacitor C2 in series, and a series circuit formed by the ninth resistor R9 and the second capacitor C2 is connected to the seventh resistor R7 in parallel. To be specific, a first terminal of the second capacitor C2 is connected to the first terminal of the seventh resistor R7, a second terminal of the second capacitor C2 is connected to a first terminal of the ninth resistor R9, and a second terminal of the ninth resistor R9 is connected to the second terminal of the seventh resistor R7.

Similarly, the ninth resistor R9 and the second capacitor C2 are configured to provide a path that is turned on quickly. When the second signal undergoes changes between high and low levels, the charge and discharge characteristics of the second capacitor C2 can be used to enable a change result of the second signal to be transmitted faster to the transistor Q3, so that the transistor Q3 is turned on and off quickly.

In practical applications, when the signal output by the battery management system 200 is a high-level signal, the high-level signal is transmitted to the base of the transistor Q3 through the seventh resistor or through the second capacitor C2 and the ninth resistor. Because a voltage of the emitter of the transistor Q3 is a voltage of the first power supply V1, it is also at a high level, that is, the transistor Q3 switches off.

When the signal output by the battery management system 200 is a low-level signal, a voltage of the base of the transistor Q3 is forcibly pulled down. However, a voltage of the emitter of the transistor Q3 is a voltage of the first power supply V1, a voltage between the base and the emitter of the transistor Q3 is greater than a turn-on voltage of the transistor Q3, and the transistor Q3 switches on.

It should be understood that the selection and application of the third switch tube are similar to those of the first switch tube or the second switch tube, and are within the scope that is readily understood by persons skilled in the art, and details are not described herein. Certainly, the first switch tube, the second switch tube, and the third switch tube may be the same or different.

The fourth switch module 40 is configured to switch on or off according to a switching status of the third switch module 30, to transmit the second signal to the electronic control unit 300.

In an embodiment, the fourth switch module 40 includes a fourth switch tube, and a signal input to a control terminal of the fourth switch tube is determined by the switching status of the third switch module 30, that is, the fourth switch tube switches on or off according to the status of the third switch module 30. The schematic diagram of the circuit structure of the single-line communication circuit shown in FIG. 3 is still taken as an example, where the fourth switch tube corresponds to a transistor Q4.

As shown in FIG. 3, the fourth switch module 40 includes a tenth resistor R10, an eleventh resistor R11, and the transistor Q4, where a first terminal of the tenth resistor R10 is connected to the collector of the transistor Q3 of the third switch module 30, a second terminal of the tenth resistor R10 is connected to a first terminal of the eleventh resistor R11 and the base of the transistor Q4, a second terminal of the eleventh resistor R11 is connected to the emitter of the transistor Q4 and the first reference ground P-, the collector of the transistor Q4 is connected to the first diode D1 in the first switch module 10, and the collector of the transistor Q4 is also connected to the electronic control unit 300 through the interface S1.

Optionally, the fourth switch module 40 further includes a third diode D3, where the anode of the third diode D3 is connected to the second terminal of the tenth resistor R10, and the cathode of the third diode D3 is connected to the first terminal of the eleventh resistor R11 and the base of the transistor Q4.

The third diode D3 is configured to prevent a possible high voltage at the first reference ground P- from being reversely input to the battery management system 200, so as to protect the battery management system 200 from being damaged.

Specifically, it can be learned from the foregoing embodiment that when the signal output by the battery management system 200 is a high-level signal, the transistor Q3 switches off. In this case, the base and the emitter of the transistor Q4 are both connected to the first reference ground P-, and the transistor Q4 switches off. The signal on the interface S1 is a high-level signal by default in this case, and the electronic control unit 300 receives the high-level signal through the interface S1.

When the signal output by the battery management system 200 is a low-level signal, the transistor Q3 switches on, and the first power supply V1, the emitter and the collector of the transistor Q3, the tenth resistor R10, the third diode D3, the eleventh resistor R11, and the first reference ground P- form a path. A voltage drop on the eleventh resistor R11 is a voltage difference between two terminals of the transistor Q4, and the transistor Q4 switches on. The interface S1 is connected to the first reference ground P- through the collector and the emitter of the transistor Q4, a voltage of a signal of the interface S1 is forcibly pulled down, and the electronic control unit 300 receives the low-level signal through the interface S1.

It can be learned that when the signal output by the battery management system 200 is a high-level signal, the transistor Q3 switches off, the transistor Q4 switches off, and the electronic control unit 300 receives the high-level signal through the interface S1; and when the signal output by the battery management system 200 is a low-level signal, the transistor Q3 switches on, the transistor Q4 switches on, and the electronic control unit 300 receives the low-level signal through the interface S1. Therefore, a process of transmitting data from the battery management system 200 to the electronic control unit 300 is implemented.

Similarly, the actual selection and application of the fourth switch tube are similar to those of the first switch tube, the second switch tube, or the third switch tube, and are within the scope that is readily understood by persons skilled in the art, and details are not described herein. In addition, the first switch tube, the second switch tube, the third switch tube, and the fourth switch tube may be the same or different.

In conclusion, according to the foregoing method, when the electronic control unit 300 sends a high-level signal or a low-level signal, the battery management system 200 can receive the corresponding high-level signal or low-level signal; and when the battery management system 200 sends a high-level signal or a low-level signal, the electronic control unit 300 can also receive the corresponding high-level signal or low-level signal. In other words, a communication process between the electronic control unit 300 and the battery management system 200 is implemented.

In addition, when the battery management system 200 sends the second signal through the interface TXD, because the collector of the transistor Q4 is also connected to the first switch module 10, the battery management system 200 may further receive the second signal through the interface RXD in this case, to identify whether the signal sent by the battery management system 200 itself is abnormal, thereby further improving the accuracy of the signal sent by the battery management system 200.

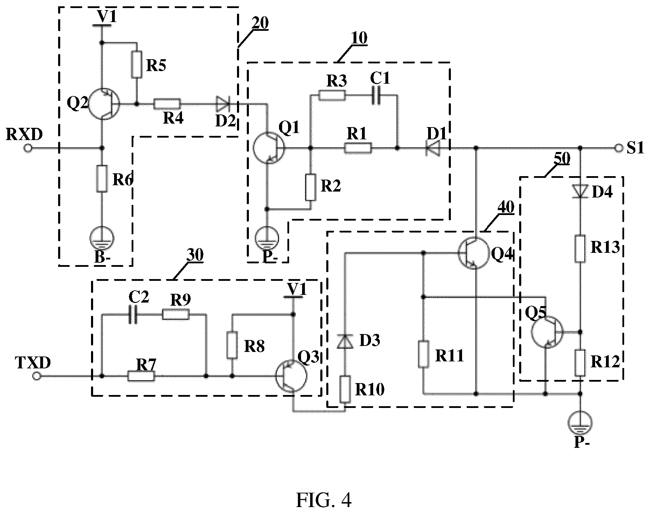

Further, as shown in FIG. 4, the single-line communication circuitfurther includes a fifth switch module 50, where the fifth switch module 50 is connected to the base of the transistor Q4, the emitter of the transistor Q4, and the first reference ground P-, and the fifth switch module 50 is further connected to the electronic control unit 300 through the interface S1.

Specifically, the fifth switch module 50 is configured to switch on or off according to a signal on the electronic control unit 300, to control a connection status between the base of the transistor Q4 and the first reference ground P-.

In an embodiment, the fifth switch module 50 includes a fifth switch tube, and an input to a control terminal of the fifth switch tube is a signal on the electronic control unit 300, that is, the fifth switch tube switches on or off according to the signal on the electronic control unit 300. A schematic diagram of a circuit structure of a single-line communication circuit shown in FIG. 4 is taken as an example, where the fifth switch tube corresponds to a transistor Q5.

As shown in FIG. 4, the fifth switch module 50 includes a twelfth resistor R12, a thirteenth resistor R13, and the transistor Q5, where the collector of the transistor Q5 is connected to the base of the transistor Q4, the emitter of the transistor Q5 is connected to the emitter of the transistor Q4, a first terminal of the twelfth resistor R12, and the first reference ground P-, a second terminal of the twelfth resistor R12 is connected to the base of the transistor Q5 and a first terminal of the thirteenth resistor R13, and a second terminal of the thirteenth resistor R13 is connected to the electronic control unit 300 through the interface S1.

Optionally, the fifth switch module 50 further includes a fourth diode D4; and the anode of the fourth diode D4 is connected to the electronic control unit 300, and the cathode of the fourth diode D4 is connected to the second terminal of the thirteenth resistor R13.

The fourth diode D4 is configured to prevent a possible high voltage at the first reference ground P- from being reversely input to the electronic control unit 300, so as to protect the electronic control unit 300 from being damaged.

Specifically, it can be learned from the foregoing implementation that when the second signal sent by the battery management system 200 through the interface TXD is a low-level signal, the transistor Q4 switches on, the interface S1 is connected to the first reference ground P- through the collector and the emitter of the transistor Q4, and the interface S1 is forcibly pulled down. However, in this case, if the signal on the interface S1 (namely, the signal on the electronic control unit 300) becomes abnormal due to disturbance, the signal is converted to a high-level signal. Then, the high-level signal passes through the fourth diode D4, the thirteenth resistor R13, the twelfth resistor R12, and the first reference ground P-, to form a path. A voltage drop on the twelfth resistor R12 is a voltage difference between the base and the emitter of the transistor Q5, and the transistor Q5 switches on. The base of the transistor Q4 is connected to the first reference ground P- through the collector and the emitter of the transistor Q5, a voltage of the base of the transistor Q4 is forcibly pulled down, and the transistor Q4 switches off. Therefore, when communication interference occurs, an automatic protection function can be performed, so as to achieve a low frame loss rate.

It should be noted that, in this embodiment of this application, the first reference ground P- and the second reference ground B- may be the same reference ground or different reference grounds. In an implementation, in order to enable the battery management system 200 to control whether to communicate with the electronic control unit 300 to implement communication, it can be implemented by setting whether the first reference ground P- is connected to the second reference ground B-.

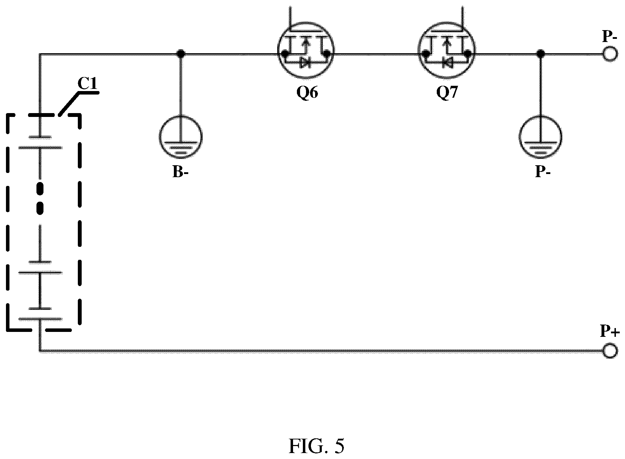

For example, FIG. 5 is a schematic diagram of a circuit structure of a reference ground control circuit according to an embodiment of this application. A ground in a cell module C1 is the second reference ground B-, a MOS tube Q6 and a MOS tube Q7 are disposed between the second reference ground B- and the first reference ground P-, and signals input to the gates of the MOS tube Q6 and the MOS tube Q7 are a control signal output by the battery management system 200 to control switch-on and switch-off of the MOS tube Q6 and the MOS tube Q7.

Specifically, when the control signal output by the battery management system 200 controls both the MOS tube Q6 and the MOS tube Q7 to switch on, the second reference ground Bis connected to the first reference ground P-, and only in this case, the battery management system 200 can communicate with the electronic control unit 300 to implement communication. Conversely, when the control signal output by the battery management unit 200 controls both the MOS tube Q6 and the MOS tube Q7 to switch off, the battery management system 200 cannot communicate with the electronic control unit 300.

An embodiment of this application further provides a battery management system, where the battery management system includes the single-line communication circuit in any one of the foregoing embodiments, and the battery management system communicates with the electronic control unit by means of the single-line communication circuit in any one of the foregoing embodiments.

An embodiment of this application further provides a battery pack, including a battery module and the battery management system in any one of the foregoing embodiments.

An embodiment of this application further provides an electrical apparatus, including a load and the battery pack in any one of the foregoing embodiments, where the battery pack is configured to supply a working voltage to the load.

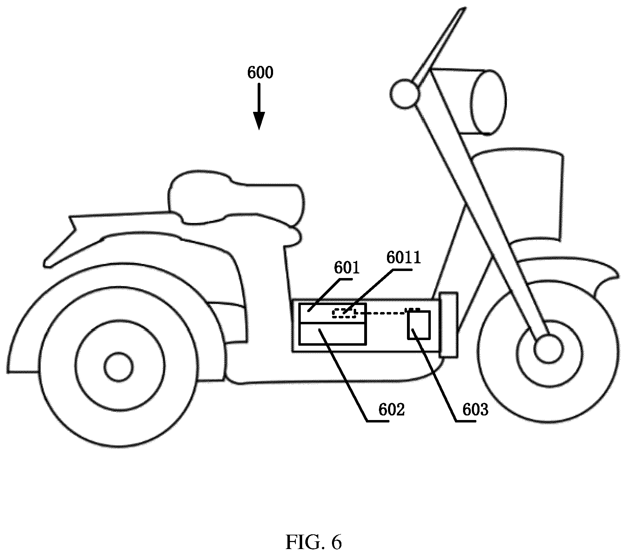

Optionally, as shown in FIG. 6, the electrical apparatus is an electric vehicle 600, the electric vehicle 600 is an electric bicycle, and the electric vehicle 600 is provided with a battery management system 601, a battery module 602, an electronic control unit 603, and a single-line communication circuit 6011 in the battery management system 601. The battery management system 601 corresponds to the battery management system 200 in any one of the foregoing embodiments, the electronic control unit 603 corresponds to the electronic control unit 300 in any one of the foregoing embodiments, and the single-line communication circuit 6011 corresponds to the single-line communication circuit 100 in any one of the foregoing embodiments. Specifically, the battery management system 601 and the electronic control unit 603 implement a communication process through the single-line communication circuit 6011.

## Claims

1. A battery management system, comprising a single-line communication circuit (100), wherein the battery management system communicates with an external device through said single-line communication circuit (100), and wherein said single-line communication circuit (100) comprises:
a first switch module (10) configured to perform a switching operation according to a first signal, a second switch module (20) configured to perform a switching operation according to a switching status of the first switch module (10), a third switch module (30) configured to perform a switching operation according to a second signal, a fourth switch module (40) configured to perform a switching operation according to a switching status of the third switch module (30);
wherein the first signal is configured to be sent by the external device to the battery management system through a first signal terminal, the second signal is configured to be sent by the battery management system to the external device through a second signal terminal;
wherein:
the first switch module (10) comprises a first resistor, a second resistor and a transistor Q1, the first resistor is connected to the second resistor in series, the transistor Q1 is disposed between the second switch module (20) and a first reference ground, the first signal is transmitted to a control terminal of the transistor Q1 through the first signal terminal;
the second switch module (20) comprises a fourth resistor, a fifth resistor, a sixth resistor, and a transistor Q2; the fourth resistor and the fifth resistor are disposed in series between a first power supply and the transistor Q1, the transistor Q2 and the sixth resistor are disposed in series between the first power supply and a second reference ground, the second signal terminal is disposed between the transistor Q2 and the sixth resistor;
the third switch module (30) comprises a seventh resistor, an eighth resistor, and transistor Q3; the seventh resistor is connected to the eighth resistor in series, the transistor Q3 is disposed between the first power supply and the fourth switch module (40), the second signal is transmitted to a control terminal of the transistor Q3 through the second signal terminal; and
the fourth switch module (40) comprises a tenth resistor, an eleventh resistor, and a transistor Q4; the tenth resistor and the eleventh resistor are disposed in series between the third switch module (30) and the first reference ground, the transistor Q4 is connected respectively to the first reference ground and the first signal terminal.

2. The battery management system according to claim **1,** wherein the first switch module (10) further comprises a third resistor and a first capacitor, the third resistor is connected to the first capacitor in series, and a series circuit formed by the third resistor and the first capacitor is connected to the first resistor in parallel.

3. The battery management system according to claim **1** or **2,** wherein the first switch module (10) further comprises a first diode disposed between the first signal terminal and the first resistor.

4. The battery management system according to any one of claims **1** to **3,** wherein the second switch module (20) further comprises a second diode disposed between the fourth resistor and the transistor Q1.

5. The battery management system according to any one of claims **1** to **4,** wherein the third switch (30) module further comprises a ninth resistor and a second capacitor, the ninth resistor is connected to the second capacitor in series, and a series circuit formed by the ninth resistor and the second capacitor is connected to the seventh resistor in parallel.

6. The battery management system according to any one of claims **1** to **5,** wherein the fourth switch module (40) further comprises a third diode, the third diode is disposed between the tenth resistor and the eleventh resistor.

7. The battery management system according to any one of claims **1** to **6,** wherein the single-line communication circuit (100) further comprises a fifth switch module (50); the fifth switch module (50) is connected to the fourth switch module (40), the first reference ground, and the first signal terminal; the fifth switch module (50) is configured to perform a switching operation according to a signal sent by the first signal terminal.

8. The battery management system according to claim **7,** wherein the fifth switch module (50) comprises a twelfth resistor, a thirteenth resistor, and a transistor Q5; the twelfth resistor and the thirteenth resistor are connected in series to the first signal terminal and the first reference ground, the transistor Q5 is disposed between the twelfth resistor and the thirteenth resistor, and the transistor Q5 is configured to connect to the fourth switch module (40).

9. The battery management system according to claim **8,** wherein the fifth switch module (50) further comprises a fourth diode disposed between the thirteenth resistor and the first signal terminal.

10. A battery pack, comprising: a battery module and the battery management system according to any one of claims **1** to **9.**

## Patentansprüche

1. Batteriemanagementsystem, umfassend eine Einleitungs-Kommunikationsschaltung (100), wobei das Batteriemanagementsystem über die Einleitungs-Kommunikationsschaltung (100) mit einer externen Vorrichtung kommuniziert, und wobei die Einleitungs-Kommunikationsschaltung (100) Folgendes umfasst:
ein erstes Schaltmodul (10), das so eingerichtet ist, dass es einen Schaltvorgang gemäß einem ersten Signal durchführt, ein zweites Schaltmodul (20), das so eingerichtet ist, dass es einen Schaltvorgang gemäß einem Schaltzustand des ersten Schaltmoduls (10) durchführt, ein drittes Schaltmodul (30), das so eingerichtet ist, dass es einen Schaltvorgang gemäß einem zweiten Signal durchführt, ein viertes Schaltmodul (40), das so eingerichtet ist, dass es einen Schaltvorgang gemäß einem Schaltzustand des dritten Schaltmoduls (30) durchführt;
wobei das erste Signal so eingerichtet ist, dass es von der externen Vorrichtung über einen ersten Signalanschluss an das Batteriemanagementsystem gesendet wird, wobei das zweite Signal so eingerichtet ist, dass es vom Batteriemanagementsystem über einen zweiten Signalanschluss an die externe Vorrichtung gesendet wird;
wobei:
das erste Schaltmodul (10) einen ersten Widerstand, einen zweiten Widerstand und einen Transistor Q1 umfasst, der erste Widerstand mit dem zweiten Widerstand in Reihe geschaltet ist, der Transistor Q1 zwischen dem zweiten Schaltmodul (20) und einer ersten Bezugsmasse angeordnet ist, das erste Signal über den ersten Signalanschluss an einen Steueranschluss des Transistors Q1 übertragen wird;
das zweite Schaltmodul (20) einen vierten Widerstand, einen fünften Widerstand, einen sechsten Widerstand und einen Transistor Q2 umfasst; der vierte Widerstand und der fünfte Widerstand in Reihe zwischen einer ersten Stromversorgung und dem Transistor Q1 angeordnet sind, der Transistor Q2 und der sechste Widerstand in Reihe zwischen der ersten Stromversorgung und einer zweiten Bezugsmasse angeordnet sind, der zweite Signalanschluss zwischen dem Transistor Q2 und dem sechsten Widerstand angeordnet ist;
das dritte Schaltmodul (30) einen siebten Widerstand, einen achten Widerstand und einen Transistor Q3 umfasst; der siebte Widerstand mit dem achten Widerstand in Reihe geschaltet ist, der Transistor Q3 zwischen der ersten Stromversorgung und dem vierten Schaltmodul (40) angeordnet ist, das zweite Signal über den zweiten Signalanschluss an einen Steueranschluss des Transistors Q3 übertragen wird; und
das vierte Schaltmodul (40) einen zehnten Widerstand, einen elften Widerstand und einen Transistor Q4 umfasst; der zehnte Widerstand und der elfte Widerstand in Reihe zwischen dem dritten Schaltmodul (30) und der ersten Bezugsmasse angeordnet sind, der Transistor Q4 jeweils mit der ersten Bezugsmasse und dem ersten Signalanschluss verbunden ist.

2. Batteriemanagementsystem nach Anspruch **1,** wobei das erste Schaltmodul (10) ferner einen dritten Widerstand und einen ersten Kondensator umfasst, der dritte Widerstand mit dem ersten Kondensator in Reihe geschaltet ist, und eine durch den dritten Widerstand und den ersten Kondensator gebildete Reihenschaltung mit dem ersten Widerstand parallel geschaltet ist.

3. Batteriemanagementsystem nach Anspruch **1** oder **2,** wobei das erste Schaltmodul (10) ferner eine erste Diode umfasst, die zwischen dem ersten Signalanschluss und dem ersten Widerstand angeordnet ist.

4. Batteriemanagementsystem nach einem der Ansprüche **1** bis **3,** wobei das zweite Schaltmodul (20) ferner eine zweite Diode umfasst, die zwischen dem vierten Widerstand und dem Transistor Q1 angeordnet ist.

5. Batteriemanagementsystem nach einem der Ansprüche **1** bis **4,** wobei das dritte Schaltmodul (30) ferner einen neunten Widerstand und einen zweiten Kondensator umfasst, der neunte Widerstand mit dem zweiten Kondensator in Reihe geschaltet ist, und eine durch den neunten Widerstand und den zweiten Kondensator gebildete Reihenschaltung mit dem siebten Widerstand parallel geschaltet ist.

6. Batteriemanagementsystem nach einem der Ansprüche **1** bis **5,** wobei das vierte Schaltmodul (40) ferner eine dritte Diode umfasst, wobei die dritte Diode zwischen dem zehnten Widerstand und dem elften Widerstand angeordnet ist.

7. Batteriemanagementsystem nach einem der Ansprüche **1** bis **6,** wobei die Einleitungs-Kommunikationsschaltung (100) ferner ein fünftes Schaltmodul (50) umfasst; das fünfte Schaltmodul (50) mit dem vierten Schaltmodul (40), der ersten Bezugsmasse und dem ersten Signalanschluss verbunden ist; das fünfte Schaltmodul (50) so eingerichtet ist, dass es einen Schaltvorgang gemäß einem von dem ersten Signalanschluss gesendeten Signal durchführt.

8. Batteriemanagementsystem nach Anspruch **7,** wobei das fünfte Schaltmodul (50) einen zwölften Widerstand, einen dreizehnten Widerstand und einen Transistor Q5 umfasst; der zwölfte Widerstand und der dreizehnte Widerstand mit dem ersten Signalanschluss und der ersten Bezugsmasse in Reihe geschaltet sind, der Transistor Q5 zwischen dem zwölften Widerstand und dem dreizehnten Widerstand angeordnet ist, und der Transistor Q5 so eingerichtet ist, dass er mit dem vierten Schaltmodul (40) verbunden ist.

9. Batteriemanagementsystem nach Anspruch **8,** wobei das fünfte Schaltmodul (50) ferner eine vierte Diode umfasst, die zwischen dem dreizehnten Widerstand und dem ersten Signalanschluss angeordnet ist.

10. Batteriepack, umfassend: ein Batteriemodul und das Batteriemanagementsystem nach einem der Ansprüche **1** bis **9.**

## Revendications

1. Un système de gestion de la batterie comprenant un circuit de communication à une seule ligne (100), dans lequel le système de gestion de la batterie communique avec un dispositif externe par l'intermédiaire dudit circuit de communication à une seule ligne (100), et dans lequel ledit circuit de communication à une seule ligne (100) comprend :
un premier module de commutation (10) configuré pour effectuer une opération de commutation selon un premier signal, un deuxième module de commutation (20) configuré pour effectuer une opération de commutation en fonction de l'état de commutation du premier module de commutation (10), un troisième module de commutation (30) configuré pour effectuer une opération de commutation selon un deuxième signal, un quatrième module de commutation (40) configuré pour effectuer une opération de commutation en fonction de l'état de commutation du troisième module de commutation (30) ;
le premier signal étant configuré pour être envoyé par un dispositif externe vers un système de gestion de batterie via une première borne de signal, le deuxième signal étant configuré pour être envoyé par le système de gestion de batterie au dispositif externe via une deuxième borne de signal ;
dans lequel :
le premier module de commutation (10) comprend une première résistance, une deuxième résistance et un transistor Q1, la première résistance est connectée en série à la deuxième résistance, le transistor Q1 de est disposé entre le deuxième module de commutation (20) et une première masse de référence, le premier signal est transmis à une borne de commande du transistor Q1 par l'intermédiaire de la première borne de signal ;
le deuxième module de commutation (20) comprend une quatrième résistance, une cinquième résistance, une sixième résistance et un transistor Q2; la quatrième résistance et la cinquième résistance sont disposées en série entre une première alimentation et le transistor Q1, le transistor Q2 et la sixième résistance sont disposés en série entre la première alimentation et une deuxième masse de référence, la deuxième borne de signal est disposée entre le transistor Q2 et la sixième résistance ;
le troisième module de commutation (30) comprend une septième résistance, une huitième résistance et transistor Q3; la septième résistance est connectée en série à la huitième résistance, le transistor Q3 est placé entre la première alimentation et le quatrième module de commutation (40), le deuxième signal est transmis à une borne de commande du transistor Q3 par l'intermédiaire de la deuxième borne de signal ; et
le quatrième module de commutation (40) comprend une dixième résistance, une onzième résistance et un transistor Q4 ; la dixième résistance et la onzième résistance sont disposées en série entre le troisième module de commutation (30) et la première masse de référence, le transistor Q4 est connecté respectivement à la première masse de référence et à la première borne de signal.

2. Le système de gestion de la batterie selon la revendication 1, dans lequel le premier module de commutation (10) comprend en outre une troisième résistance et un premier condensateur, la troisième résistance étant connectée en série au premier condensateur, et un circuit en série formé par la troisième résistance et le premier condensateur étant connecté en parallèle à la première résistance.

3. Le système de gestion de la batterie selon la revendication 1 ou 2, dans lequel le premier module de commutation (10) comprend en outre une première diode disposée entre la première borne de signal et la première résistance.

4. Le système de gestion de la batterie ligne selon l'une quelconque des revendications 1 à 3, dans lequel le deuxième module de commutation (20) comprend en outre une deuxième diode disposée entre la quatrième résistance et le premier tube de commutation.

5. Le système de gestion de la batterie selon l'une quelconque des revendications 1 à 4, dans lequel le troisième module de commutation (30) comprend en outre une neuvième résistance et un deuxième condensateur, la neuvième résistance étant connectée en série au deuxième condensateur, et un circuit en série formé par la neuvième résistance et le deuxième condensateur étant connecté en parallèle à la septième résistance.

6. Le système de gestion de la batterie selon l'une quelconque des revendications 1 à 5, dans lequel le quatrième module de commutation (40) comprend en outre une troisième diode, la troisième diode étant disposée entre la dixième résistance et l'onzième résistance.

7. Le système de gestion de la batterie selon l'une quelconque des revendications 1 à 6, dans lequel le circuit de communication à une seule ligne (100) comprend en outre un cinquième module de commutation (50) ; le cinquième module de commutation (50) étant connecté au quatrième module de commutation (40), à la première masse de référence et à la première borne de signal ; le cinquième module de commutation (50) étant configuré pour effectuer une opération de commutation selon un signal envoyé par la première borne de signal.

8. Le système de gestion de la batterie selon la revendication 7, dans lequel le cinquième module de commutation (50) comprend une douzième résistance, une treizième résistance et un transistor Q5 ; la douzième résistance et la treizième résistance sont connectées en série à la première borne de signal et à la première masse de référence, le transistor Q5 est disposé entre la douzième résistance et la treizième résistance, et le transistor Q5 est configuré pour se connecter au quatrième module de commutation (40).

9. Le système de gestion de la batterie selon la revendication 8, dans lequel le cinquième module de commutation (50) comprend en outre une quatrième diode disposée entre la treizième résistance et la première borne de signal.

10. Un bloc-batterie, comprenant : un module batterie et le système de gestion de batterie selon l'une quelconque des revendications 1 à 9.
